# EUROPEAN PATENT SPECIFICATION

(11) **EP 2 429 280 B1**
(45) Date of publication and mention of the grant of the patent: **17.04.2013**
(21) Application number: 10701254.4
(22) Date of filing: 08.01.2010
(51) Int. Cl.: A01K 5/02

(54) **ANIMAL FEEDING APPARATUS**
TIERFÜTTERUNGSGERÄT
APPAREIL POUR L'ALIMENTATION D'ANIMAUX

(30) Priority: 08.01.2009 GB 0900227; 13.08.2009 GB 0914149
(43) Date of publication of application: 21.03.2012
(73) Proprietor: Pet Technology Store Limited, Guernsey GY7 9AL (GB)
(72) Inventor: CHAMBERLAIN, David, Guernsey GY7 9AL (GB); SMITH, Nicholas, Andrew, James, Guernsey GY2 4SW (GB); CHAMBERLAIN, Helen, Guernsey GY7 9AL (GB)
(74) Representative: Walker, Neville Daniel Alan
(86) International application number: PCT/GB2010/000017
(87) International publication number: WO 2010/079328

(56) References cited:
- EP-A1- 0 636 312
- EP-A2- 0 610 171
- EP-A2- 1 145 627
- EP-A2- 1 300 074
- EP-A2- 1 360 895
- US-A- 5 778 820

## Description

### Field of Invention

The present invention relates to the animal feeding, more particularly provision of food to specified animals.

### Background of Invention

Pets require a degree of commitment from an owner. Occasionally that commitment becomes a problem. An occasion such as this might be when the owner intends to be away from the pet for an extended period of time, returning after a normal mealtime for a pet; if the pet owner is delayed returning to the pet; or if the owner has to go on holiday. Typically the transportation of a pet on holiday is a problem, either because of space and exercise restrictions, or in the case of overseas travel because of difficulties encountered with travelling with pets or even the law.

Typically therefore, a pet is often left at home or put into boarding facilities. These facilities can cost a considerable amount of money and are not to all pet owner's taste. Leaving a pet at home has limitations also. Animals may be unlikely to ration the food left for them and may finish the food after a few hours.

A number of systems exist which are intended to address this problem by, for example, providing a timing arrangement which automatically dispenses food at predetermined intervals, so that a pet does not become hungry. Some of these systems are discussed below.

### Prior Art

US Patent Application US 5 349 925 A1 (ZERATO) discloses a feeder for the presentation of food products for animals. The feeder includes a storage bin for containing animal food with a lidded top and a pressure plate linked to the top. When an animal stepped upon the pressure plate, the lid opens revealing the interior of the bin.

US Patent US 7 124 707 B1 (CLARKE) discloses an apparatus for the provision of food to a first animal. The apparatus includes a container for receipt of the food and a transmitter that is attached to the first animal and a receiver that is operatively attached to the apparatus. The transmitter emits a signal continuously or a signal only when it is proximate to the apparatus. The apparatus receives and responds to the signal to allow access to the food in the container when the signal is present. When the signal is not received by the apparatus, access to the food in the container is denied.

US Patent US 7 395 782 B1 (LINDSAY) discloses a system and method for providing access to animal food utilising identification tags on domestic animals, generally attached to a collar. The identification tag generates a signal that is detected by a receiver mounted on an enclosed food container. When the receiver detects a pre-selected acceptable signal from an animal, it activates a motor that causes a movable portion of the container to move to an open position. If the signal is no longer detected by the receiver, it activates the motor to move the movable portion of the container to a closed position. If the receiver detects a signal from an identification tag that is not one of the pre-selected signals, it activates the motor to move the movable portion of the container to a closed position.

European Patent Application EP-A2-1 145 627 (Lely Enterprises AG) describes a feed metering device for dispensing pre-metered portions of food and/or drink for ruminants, such as cows, and monitors whether portions have been consumed. The device uses this information to assess the state of animals' health. To prevent one animal from consuming more than its allotted ration (or that of another animal) a passive deterring means, which may be a closing means, is movable across an entrance of an opening of a dispenser.

US Patent US 3 897 753 B1 (LEE) discloses an arrangement for controlling access of animals to selected areas, such as to a gate/door or a mechanical food dispenser. In the event that the presence of an unauthorised animal is detected, an electric shock, noise or flashing light is triggered so as to repel the unauthorised animal.

Recently such static stimuli have lost favour and in some jurisdictions collars which are capable of giving an electric shock, are being made illegal.

Other examples of automated animal feeding systems are described in US Patent Application US-A1-2005/0217591 (TURNER), US Patent Application US-A1-2005/0284382 (STANCHEV), US Patent Application US-A1-2005/0061252 (MEEKS) and US Patent US-B1-6 044 795 (MATSUURA).

An object of the present invention is to provide and improve the process of authorised animal recognition and automated provision of food to animals, and in particular where there is more than one animal, in an unmonitored situation, where such unauthorised animals can steal food that has been dispensed.

Another object of the present invention is to provide a means of regulating the provision of food to an animal when there is no human supervision, again with the aim of ensuring that unauthorised animals do not steal food. Animals for which feed is not intended are hereinafter referred to as unauthorised animals.

### Summary of Invention

According to a first aspect of the invention an animal feeding apparatus includes: an animal identification means which, in use, detects the presence of an animal; a processor for processing a signal derived from said animal identification means, said processor determines whether the animal is an authorised animal; a storage hopper, which in use receives animal feed; a dispenser, which is operative to dispense a predetermined amount of animal feed to an authorised animal; and a mechanism for repelling an animal, for which feed is not intended,

Ideally the repelling mechanism includes a device for dispensing a volume of pressurised fluid which startles an unauthorised animal.

As the animal identification means senses the presence of an animal and carries out an identification and assessment of whether the animal whose presence is detected is an authorised animal and ideally include a means for scanning animal identification implants so as to provide an identification signal indicative of an animal for which the feed is intended. However, other animal identification means may be employed, such as an image recognition to image the face or iris of an animal or some other device or system that unambiguously identifies the animal or pet for which feed is intended.

Preferably the identification device or devices recognised by the animal identification means include: implanted Radio Frequency Identification Devices (RFID) chips or tags. Typically these RFID chips or RFID tags are passive devices and are located sub-dermally, in the animal's body, for example in the head, neck or shoulder region of the animal.

RFID chips or RFID tags typically have a short operating range. Therefore the apparatus includes a scanner and an antenna, within a module, cowl, bezel or similar arrangement that is dimensioned and shaped for receiving the head of an animal, so that the antenna is optimally positioned to receive signals from the RFID device.

The means for repelling undesirable animals may consist of an unpleasant smell or sound, a sound inaudible to human hearing, a light or strobe or a puff of fluid, such as gas or a liquid that is released when the unauthorised animal approaches the apparatus. In an alternative embodiment a small electric shock may be given to the unauthorised animal.

The means for repelling undesirable animals may, for example, trigger when the snout of the unwanted animal is detected close to where food is dispensed or it may be triggered by some other detector, such as for example, a pressure sensor and/or scanner that detects the presence of an unauthorised animal, either by way of an identification implant or some other sensing means, such as a motion detector or pressure sensor..

It is understood that although animals are repelled they are not harmed or injured in any way; merely startled, shocked or coerced so as not to be in a location close to where the permitted animal's food has been dispensed.

Ideally the means for repelling an unauthorised animal comprises: a pressurised air outlet which may be arranged to produce a noise as well as a puff or jet of air, gas or liquid (such as water), so as to repel a speculative animal from attempting to eat the food of an intended recipient animal.

The preferred animal proximity detector is an RFID detector. Another animal proximity detector may be a motion sensor such as a beam that is interrupted, for example an infra-red beam and sensor. An alternative animal proximity detector is a pressure sensor operative to sense the weight of an animal. The animal proximity detector may be used in conjunction with the animal identification means and a microprocessor in order to determine whether the animal that is detected at the feeding apparatus is an 'authorised' animal or not and if the animal is not an authorised animal, the optimum moment to startle it.

It will be understood that the animal identification means in the feeder may be used to determine whether the animal is authorised or not, when for example, an animal with an RFID tag is detected and the identity of the animal is not stored as an animal permitted to consume food.

Feed is ideally dispensed into a bowl, which is located within the apparatus. Advantageously the bowl is removable from a support so that it can be cleaned when required.

Ideally the apparatus is triggered or enabled to become active at predetermined times or intervals, for example by way of a programmed timer. The activated state of the apparatus is then conveyed to the animal, for example by an audible and/or visual means. Thus a sound or other alarm may indicate to an authorised animal that it is feeding time. One such alarm may be a signal that is sent via a radio frequency link to, for example, a collar worn by the authorised animal, so that it discreetly vibrates, in a similar way to a pager. In this way only the intended recipient of the animal feed (ie the authorised animal) is alerted to the fact that feed is about to be dispensed. This feature may be combined with an override function, overseen by the processor, which takes account of the fact that an animal may not have been present for the previous one or more meals and as a consequence of no food being dispensed is hungry. Accordingly the override function places the apparatus into a standby condition so that when the authorised animal approaches, with a view to seeking food, for example by placing its head close to the bowl, a small amount of food is dispensed, effectively in response to a request from the animal.

In addition to this override feature the feeding apparatus may be configured to an active dispensing state, so that when the authorised animal has consumed the small amount of food, the remainder of a missed meal is dispensed from the hopper to a feeding bowl. The timer is then adjusted so that an appropriate interval is then set before the next meal can be dispensed, so as to avoid the animal gorging itself.

By activating the apparatus intermittently, and only delivering small amounts of food, a number of objectives are achieved. Feeding little and often mimics the natural feeding habits of many small animals, especially cats. Also little and often feeding can be used to facilitate in the treatment of certain gastrointestinal diseases.

Activating intermittently encourages the pet to visit the apparatus frequently which encourages mobility and weight loss. Also, because smaller amounts of feed can be delivered intermittently; the chances of other animals stealing a large proportion of the authorised animal's daily ration are reduced. Furthermore because feed is not constantly available this discourages neighbouring animals from attempting to steal food.

Optionally different sized modules or cowls may be supplied so as to suit different sized animals.

The apparatus typically, but not exclusively, dispenses quantities of foodstuffs. These are dispensed from the hopper through a channel that may be sealed or opened by an opening means, such as a plunger, for example controlled by way of a motor and worm gear drive, servo device and actuator, an electromagnetic catch or a sprung door. Alternatively an auger or Archimedean screw type dispenser may be used to transfer feed from a hopper to a shute or directly to the bowl. Likewise liquid may be dispensed from the same or a different apparatus under control of a motorised valve from a sealed reservoir.

In one preferred embodiment a food presence sensor is arranged to detect the presence of unconsumed food and upon receipt of a signal from the sensor, indicating unconsumed food, an override signal is sent to the processor which prevents further dispensation of food. The purpose of this is to avoid waste, ensure that food is not available to other 'unauthorised' animals, as well as ensuring that dispensed food is not exposed to the surroundings for too long a period as well as preventing the animal from over eating.

In an alternative embodiment the food presence sensor sends a signal to a means for making an assessment of how much food is left and therefore how much food an animal has consumed. Processing means may be provided to take this factor into account when a subsequent meal/feed is dispensed. The means for making an assessment of how much food is left may include a mechanism for weighing the remaining food.

Alternatively the food presence sensor may take the form of an infra red (IR) source projecting a signal which is reflected from a feeding bowl, from which reflected signal an assessment of unconsumed feed may be obtained.

The processor may be configured to monitor the number of occasions and/or total amount of time during which feed remains unconsumed in the bowl. In the event that these occasions are too frequent an alarm may be triggered indicating a potential problem with the animal. Optionally the alarm may be relayed, for example via a GPS, to a mobile communication device (such as a cell phone) of the animal owner or carer.

Ideally the animal feeding apparatus includes an animal identification means which in use scans animal identification implants; and a processor for processing signals derived from an RFID device worn by, or implanted sub-dermally in the animal, and a means for storing animal identification data; a means for accessing said data and a means for processing data derived from said RFID device.

In this preferred embodiment it will be appreciated that data can be collected, stored and processed relating to the feeding habits of the animal.

Information relating to the number of visits from unauthorised animals may also be obtained and be made available, for example on a removable data storage device (such as a so called memory stick) or via a telemetric link, such as a 'GPS' transmitter to be reviewed later by a veterinary advisor, owner or carer.

Advantages of the invention are therefore that it may be used to measure physiological parameters of the animal; record and display the physiological parameters and/or animal feeding habits and frequency directly to the owner or on a computer connected directly or via wireless means.

Means may also be provided for altering feeding times and/or feeding quantity/frequency dependent upon the result of physiological parameter measurements. This may be readily achieved in one embodiment by opening a cover from the hopper to the bowl for a longer or shorter period, thereby allowing more or less food to leave the hopper.

Preferably the apparatus may be programmed, for example by owners, by veterinary surgeons or by nutritional advisors, as to food quantities and timing. This feature allows provision of food in pre-selected quantities and at pre-selected timings to pre-selected groups or categories or individual animals. There is hence a user control method linked to, or incorporated on, the apparatus. This may consist of a remote control or a control pad or interface on the apparatus, singly or in combination, a 'hard' wire, wireless or 'GPS' connection.

Ideally the apparatus provides an audible or visual stimulus when food has been dispensed for the animal. The audible signal may consist of a recording of the owner's voice. The apparatus may be equipped with a microphone to record sounds or may be compatible with other recording or composing devices. The audio data may be in recordable in .mpeg, .avi or other equivalent digital format.

The apparatus optionally is equipped with a data storage facility. In one embodiment the apparatus may record, provide or compile a catalogue of available feeds that an individual animal has accessed. This may be viewable on a display or printable, either on or by the apparatus. Alternatively it is capable of being downloaded to another device.

There is optionally provided on the apparatus means for connecting the apparatus to other devices. This may consist of a Universal Serial Bus (USB) port, Bluetooth (Registered Trade Mark) connector, wireless or wired modem, or other wired or wireless method.

In some embodiments the apparatus may have programmable schedules for more than one animal's feeding. These may also be configured remotely or on the apparatus itself.

In another embodiment a projection device is included which is arranged to project an image to be chased by an authorised animal, within a predefined area , under control of a random motion device; and a dispenser, which is operative to dispense the feed to an authorised animal upon receipt of a command signal.

Ideally the monitoring means determines the amount of times the projected image is "caught", for example by way of a motion sensor and/or an image detector, and means is provided to determine the efficacy of chasing of the image by the animal or pet, in accordance with a comparison of the position of the image and the position of the animal or pet and issues the command signal to release a reward.

In this further embodiment pets - such as a cat, which are natural predators - are encouraged to engage in games where they chase a projected image. The projected image may be a simple shape or silhouette of an animal, such as a mouse.

The projected image may be from a focussed incoherent source or ideally from a source of coherent light, such as a laser, which is ideally a laser light emitting diode (LED).

In an alternative embodiment there is provided a "hand held" or remote projection device that an owner can use to engage the cat in a game of chase. Suitable detectors, such as accelerometers, are optionally provided in the handset in order to provide an indication of the whereabouts of the cat at any instant. An optional integrator enables the total distance travelled by the cat to be calculated automatically and a means to provide a command signal actuates a dispenser of food or an edible reward when a certain amount of time has passed or energy has been expended. Alternatively a command signal can be triggered by the user at will, for example by activating a radio or an infra red beam.

The reward that is dispensed could be part of the total daily ration or an additional reward. This facility thus offers an opportunity for another level of play enabling the owner and pet to interact.

Preferred embodiments of the invention will now be described, by way of example only, and with reference to the Figures in which:

### Brief Description of Figures

Figure 1 shows a diagrammatical cross-section view of the apparatus;
Figure 2 shows a diagrammatical plan view of the apparatus from the front;
Figure 3 shows an overhead view of the apparatus;
Figure 4 is a diagrammatical representation showing the apparatus in use;
Figure 5 shows a diagrammatical cross-section view of an alternative embodiment of the apparatus;
Figure 6 is a block diagram showing key functional elements of control and operation of the embodiment in Figure 5; and
Figures 7a and 7b show views of the embodiment shown in Figures 5 and 6, illustrating a cat chasing a projected image and Figure 7c shows the cat being rewarded after a period of exercise.

### Detailed Description of Figures

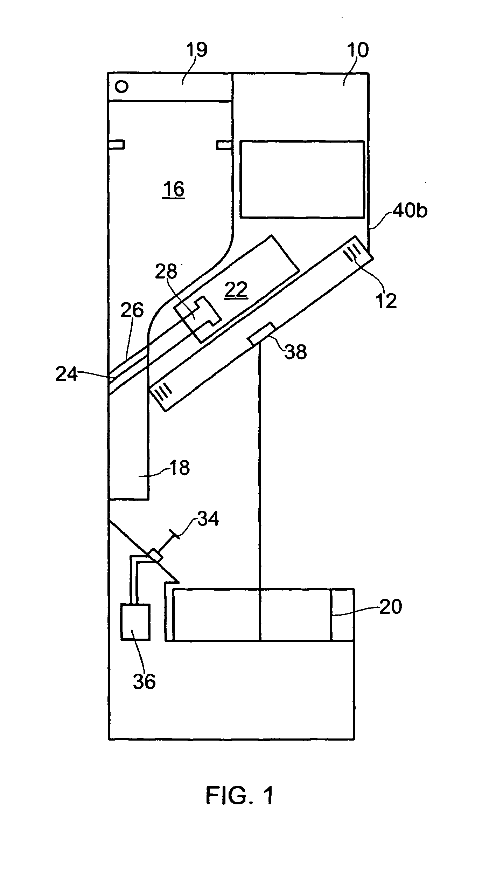

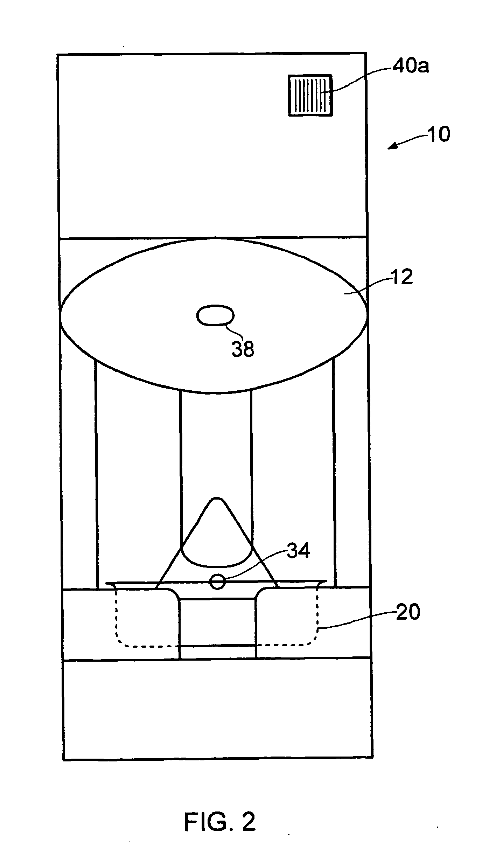

An embodiment of the apparatus 10 is shown, in diagrammatical form, in Figure 1 from the side, with internal elements visible and Figure 2 from the front, which also shows some normally hidden features. The apparatus 10 is ideally a generally triangular shaped segment, which may be a right-angled triangle enabling it to fit into a corner, and additionally making the apparatus a discreet, easily locatable unit having minimum interference in a room and permitting it to be used as frequently or infrequently as desired, as it may be left outdoors continuously. This has an added benefit in not advertising the absence of the owner.

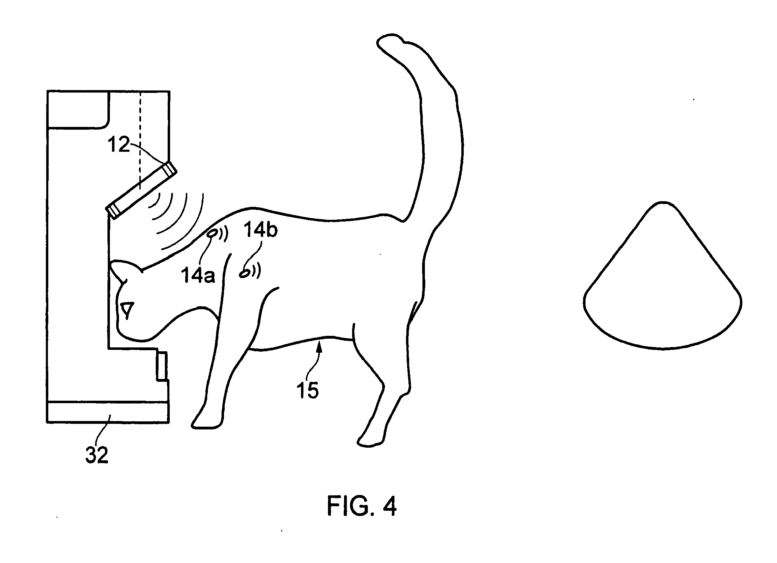

The sides of the apparatus are cut away to enable good side ways vision so that the feeding pet does not feel vulnerable to surprise approaches. Angled coil of antenna 12 functions to scan Radio Frequency Identification Device (RFID) microchip 14 implanted in a cat 15 (shown in Figure 4). It is envisaged and illustrated that antenna 12 acts as a scanner of sub dermal and subcutaneous microchips 14 by defining an angled "walk under" coil. In alternate embodiments the coil may be vertical or horizontal. In yet further embodiments coils may be arranged in a "walk through" or at least a "poke head through" arrangement to access a feeding bowl.

Typically in the UK, RFID chips are implanted subcutaneously in the cranial or shoulder blades in a dorsal position of a pet, such as a dog or cat. Typically in the EU these are implanted in the left shoulder region. Either of these areas is capable of being scanned by the angled coil antenna 12.

When an authorised animal, such as cat 15, is identified and optionally other criteria are met, eg it is a predetermined 'feeding time', the animal is provided with food (not shown). When these criteria are met food stored in hopper 16, after it has been dispensed via shute 18 into a bowl 20. Bowl may be removable for cleaning. Hopper 16 has a lockable lid so as to ensure that pets cannot knock the apparatus 10 over or break into the food storage hopper 16.

Food is stored in hopper 16 and released into a bowl 20 via feeding recess 17 and shute 18. Shute 8 is opened and shut with an electrically operated plunger 22. The hopper 16 and the bowl 20 are designed to be removable from the apparatus for cleaning.

In addition the catch 21 provides an airtight space and the hopper 16 may be a cooled container. In this way food can be left fresh for a number of days, and in summer conditions, when typically a user will want to be out of the house. The hopper 16 consists of one space in the pictured embodiment, but in other embodiments the hopper 16 may be divided into multiple spaces, with different compartments enclosing different foodstuffs.

The size, frequency and timing of feeds can all be varied to suit the individual pet. The embodiment of the apparatus that is shown is designed to contain sufficient food for one pet for one day only. This embodiment of the apparatus is so designed as it may not be in an animal's interest to be left unattended for long periods. However, larger systems with larger hoppers are within the scope of the invention.

The plunger mechanism comprises a rod 24, a stopper 26 and a piston 28. This piston 28 is operated by a microprocessor 30 and opens and closes shute 18 when food is released.

A power supply (not shown) may include batteries that are ideally located in a base portion 32. Alternatively an external mains electricity supply may be used in conjunction with a transformer.

The apparatus is designed to use a low voltage electrical supply. The battery in the base aids the stabilisation of the device and reduces the risks of it toppling over.

Negative stimuli are provided for animals that are not permitted to access particular feeds. For example in the embodiment shown this includes an expellation device 34 which consists of a compressor or canister of compressed gas 36 to provide a blast of compressed air to startle and frighten off any unauthorised animal from the apparatus, when detected. Means for detecting the presence of an animal (not shown) includes devices such a pressure sensor and/or an image recognition system and/or a scanner for determining the identity of an animal attempting to steal food. These devices may be configured to operate with one another so as to reduce the risk of false identification of an animal.

Another stimulus shown is a light 38 that may be used either to deter unwanted animals or provide a means of attracting an authorised animal when a feed is ready. This may also be used in combination with a recording of the animal owner's voice. This recording is facilitated by a combined microphone and loudspeaker 40, as shown in Figure 2.

Alternatively means of downloading externally recorded sounds or clips is provided. This may consist of a Universal Serial Bus (USB) port. Alternatively the apparatus 10 may be equipped with Bluetooth (Registered Trade Mark) connectivity. In further alternatives wireless modem connectivity may be provided.

The apparatus 10 may also have the possibility of measuring and recording physiological parameters such a glucose levels in tissue fluids. This information may be used to determine feed size and frequency. Such information may be stored and loaded onto a computer (not shown) for analysis either by wireless or wired means and could be used to determine an amount of feed dispensed.

Figure 2 also shows removable bowl 20 that is placed in the feeding recess 17. If this bowl 20 is used as well as the recess there is the possibility of easy removal and cleaning.

As can be also seen in Figure 2 the expellation device 34 for repelling unwanted animals, is located directly above and in front of the feeding recess 17 and below the coil antenna 12, thereby enabling easy deterrence of unwanted animals, even when food has already distributed. This deterrence is achieved by a puff of air or squirt of water in the face of the animal which has no option but to present its face close to the expellation device in order to eat. The puff of air is then repeated each time the unwanted animal returns. The pressure of this puff may be adjustable with embodiments having a compressor and means may be provided to steadily increase the intensity and/or duration for unauthorised animals repeatedly attempting to steal food. Alternatively the puff of gas may be an unpleasant smelling gas from an aerosol.

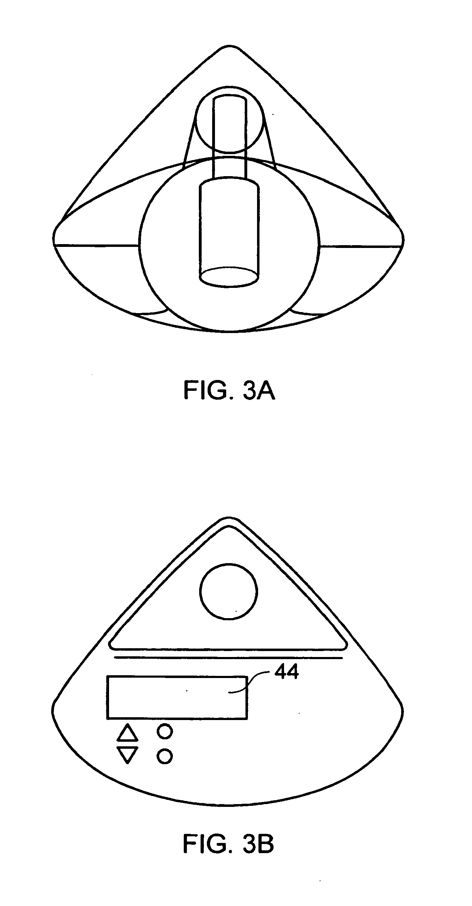

As can be seen from Figure 3 the generally triangular segment shape of the apparatus allows it to be conveniently sited in a corner, further minimising the risk of an animal being ambushed successfully by another animal. Any animal attempting to steal food that has been permitted and/or allocated for another animal will first have to remove the feeding animal from the rear. This creates a necessarily harder task.

The top of the apparatus is equipped with a Liquid Crystal Display (LCD) 44 or similar display interface allowing a user to interface with the apparatus and program meals, animals, frequency, quantities of feed and the like. Different versions of the apparatus may be produced with differing levels of interactivity and programmability. This may depend upon the complexity and sophistication of the microprocessor 30 that is used as well as the software.

In the embodiment pictured the manner of input is shown at control panel 46 having buttons to access menus. Remote controls may be alternatively or additionally provided for users with limited mobility.

Storage hopper 16 is shown with a hinged lid 19, capable of being firmly closed with a catch 21. The hinged lid 19 allows easy access to the hopper 16 for refilling purposes. In addition the lid of the hopper is firmly secured so that it cannot be prised off by pets who are trying to access the full reservoir.

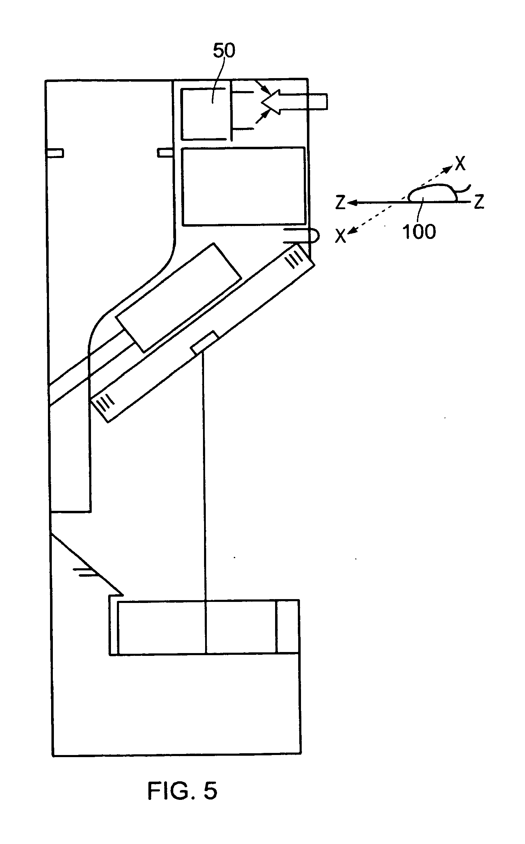

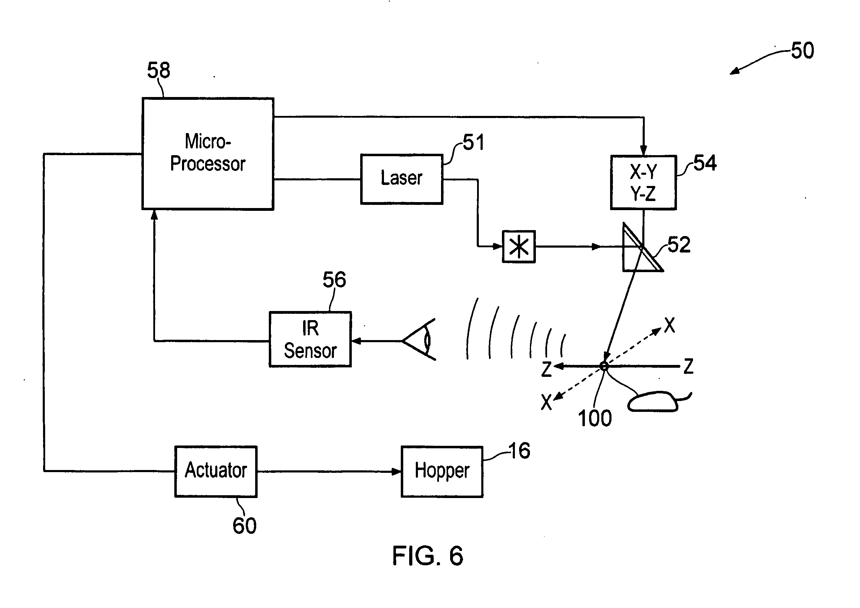

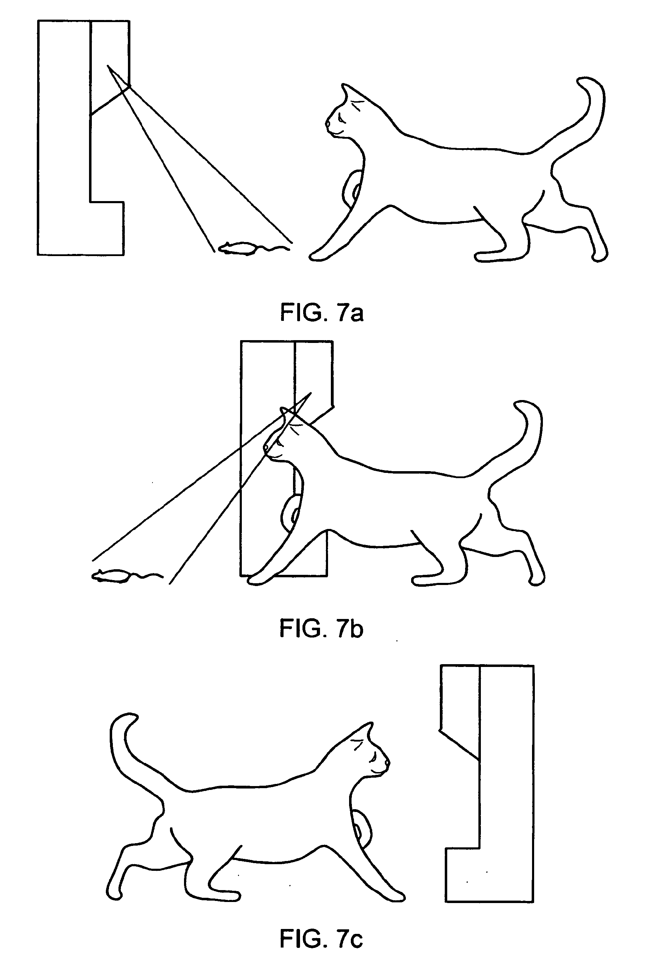

Referring to Figures 5, 6 and 7, a projected light, such as a laser light, for forming an image 100, emerges formed from a laser 51. The image is, for example in the form of a silhouette or spot of light, and is projected randomly by reflection off a prismatic mirror 52 which is moved at random by way of an actuator. The mirror 52 is ideally operated by way of a servo, galvanic device, piezoelectric actuator 54 or similar device, which is arranged to displace the mirror 52 in two planes X-Z and Y-Z.

As a result light is reflected within a space, whose size may be set before commencement of a "game" or predefined exercise session. For example the laser 51 may be reflected onto a surface of say 1 square metre, 2 square metres or 3 square metres or a larger area. Clearly the larger the area, into which the laser 51 can be reflected, the more exercise the animal, typically a cat, receives. This exercise is in the form of teasing/encouraging the cat to chase the light spot 100, thereby mimicking the natural desire of a cat to chase prey and is an ideal way to exercise the cat, especially one that spends a lot of time indoors

A sensor, such as an infra-red sensor 56, acts as a monitoring means and determines the amount of times the projected image 100 is "caught". This is achieved for example by way of a motion sensor and/or an image detector, and means is provided to determine the efficacy of chasing in accordance with a comparison of the position of the image and the position of the cat and issues the command signal to release a reward.

Alternatively by placing a narrow wavelength light detector/reflector 103 on the face or head of the animal, a reflection of the light spot 100 can be detected during a chase sequence. Alternatively the narrow wavelength detector 103 may be attached to the collar of the pet. The apparatus is then programmed to deliver a small food reward by triggering actuator 60 to open hopper 16. This can be achieved by the micro-processor 58 which is programmed to over ride any pre-programmed feeding regime.

The reward encourages the cat to engage in the chase game and therefore engage in exercise to promote weight loss. It encourages the cat to repeatedly engage in its natural hunting instinct because it provides a reward.

In addition to the above an alternative embodiment encourages certain pets - such as cat, which are predators - to engage in games where they chase a projected image. The projected image may be a silhouette of an animal, such as a mouse.

The projected image may be from a focussed incoherent source or a coherent source such as a laser, which is ideally a red laser light.

Variation in the invention may be made to some embodiments by including a compartment for medicine (not shown) which may be refrigerated and have a separate plunger on the exit, to allow separate access to the medicine in order to add it to specified feeds. Likewise liquids may be dispensed from a separate storage vessel.

Other embodiments may feature cameras to record the animals, biometric testing combined with weighing scales which can be accessed via the RFID chip, recordable rewritable memory.

In addition one or more imagers may be included in the apparatus so that for example, the pet owner van be alerted as to when their pet is feeding, either by way of a timed alert signal or an activated camera may be activated when the animal is detected (by way of its RFID tag) so that the animal can be viewed remotely, for example on the owner's mobile telephone, via '3G' or Internet connection.

It can be seen that the invention has been described by way of examples only and it will be appreciated that variation may be made to the embodiments without departing from the scope of the invention.

It is important that it is realised that although use of the apparatus might enable owners to leave their pet for extended periods, this is not to be encouraged. Generally speaking animal care professionals do not encourage or advise owners to leave their pets for more than 24 continuous hours. Therefore a preferred embodiment of the feeding apparatus is designed only to contain sufficient food for 24 hours.

Optionally a scratch tower may be incorporated on the feeding apparatus.

## Claims

1. A portable animal feeding apparatus for a pet includes: a proximity sensor which in use detects the presence of an animal and an antenna for receiving signals from a sub-dermal radio frequency identification (RFID) device; a processor for processing signals derived from the RFID device and from the proximity sensor, said processor determines whether the animal is an authorised or an unauthorised animal; a storage hopper, which in use receives animal feed; a dispenser, which is operative to dispense a predetermined amount of animal feed to an authorised animal; and a mechanism for repelling the unauthorised animal, for which feed is not intended.

2. An apparatus according to claim 1, wherein, in use, the antenna becomes operative upon detection of an animal by the proximity sensor.

3. An apparatus according to claim 1 or 2, wherein, in use, the mechanism for repelling an unauthorised animal is activated upon detection of an unauthorised animal by the proximity sensor.

4. An apparatus according to claim 1 wherein the mechanism for repelling unauthorised animals includes a device for dispensing a volume of pressurised fluid.

5. An apparatus according to claim 1 wherein an image recognition system is used to identify the animal.

6. An apparatus according to any preceding claim includes an arrangement that is dimensioned and shaped for receiving the head of an animal, so that the animal and animal identification device is optimally positioned to identify the animal.

7. An apparatus according to claims 1, 3, and 4 wherein the animal repelling mechanism further includes an audible device.

8. An apparatus according to claims 1, 3, and 4 wherein the repelling mechanism includes a visual stimulus.

9. An apparatus according to any preceding claim wherein the means for dispensing a volume of pressurised fluid includes a compressed gas canister.

10. An apparatus according to any preceding claim includes a projection device arranged to project an image to be chased and operates under control of a random controller.

11. An apparatus according to any preceding claim includes a dispenser, which is operative to dispense the feed to an authorised animal upon receipt of a command signal.

12. Apparatus according to claim 10 or 11 includes a detector for locating the position of the animal and a means for determining the efficacy of chasing in accordance with a comparison of the position of the image and the position of the animal whereby the processor is arranged to release a reward in dependence upon receipt of a command signal.

13. Apparatus according to any of claims 10 to 12 wherein the projection device is adapted to project an image in the shape of a silhouette of an animal, such as a mouse.

14. An apparatus according to any preceding claim wherein a signal is derived from a sensor and the processor determines from said signal, whether residual feed has been consumed before dispensing more feed.

15. A portable animal feeding apparatus for a pet according to any preceding claim includes: a proximity sensor which in use detects the presence of an animal and an antenna for receiving signals from a sub-dermal radio frequency identification (RFID) device; a processor for processing signals derived from the RFID device and from the proximity sensor, said processor determines whether the animal is an authorised or an unauthorised animal; a storage hopper, which in use receives animal feed; a dispenser, which is operative to dispense a predetermined amount of animal feed to an authorised animal; and a transmitter sends a signal to a device that provides an alert to an authorised animal that feed is about to be dispensed.

## Patentansprüche

1. Tragbare Tierfütterungsapparatur für ein Haustier, die Folgendes umfasst: einen Näherungssensor, der beim Gebrauch die Anwesenheit eines Tieres erfasst, und eine Antenne zum Empfangen von Signalen von einer subdermalen Funkfrequenzidentifikations-(RFID)-Vorrichtung; einen Prozessor zum Verarbeiten von Signalen, die von der RFID-Vorrichtung und dem Näherungssensor abgeleitet wurden, wobei der genannte Prozessor ermittelt, ob das Tier ein autorisiertes oder ein nicht autorisiertes Tier ist; einen Aufbewahrungstrichter, der beim Gebrauch Tierfutter aufnimmt; einen Spender, der eine vorbestimmte Menge Tierfutter an ein autorisiertes Tier ausgibt; und einen Mechanismus zum Abweisen des nicht autorisierten Tieres, für das kein Futter vorgesehen ist.

2. Apparatur nach Anspruch 1, wobei die Antenne beim Gebrauch nach dem Erfassen eines Tieres durch den Näherungssensor betriebsbereit wird.

3. Apparatur nach Anspruch 1 oder 2, wobei der Mechanismus zum Abweisen eines nicht autorisierten Tieres beim Gebrauch nach dem Erfassen eines nicht autorisierten Tieres durch den Näherungssensor aktiviert wird.

4. Apparatur nach Anspruch 1, wobei der Mechanismus zum Abweisen nicht autorisierter Tiere eine Vorrichtung zum Ausgeben eines Volumens an Druckfluid beinhaltet.

5. Apparatur nach Anspruch 1, wobei ein Bilderkennungssystem zum Identifizieren des Tieres verwendet wird.

6. Apparatur nach einem der vorherigen Ansprüche, die eine Anordnung beinhaltet, die so dimensioniert und gestaltet ist, dass sie den Kopf eines Tieres aufnimmt, so dass das Tier und die Tieridentifikationsvorrichtung zum Identifizieren des Tieres optimal positioniert werden.

7. Apparatur nach den Ansprüchen 1, 3 und 4, wobei der Tierabweisungsmechanismus ferner eine akustische Vorrichtung beinhaltet.

8. Apparatur nach den Ansprüchen 1, 3 und 4, wobei der Abweisungsmechanismus einen visuellen Reiz beinhaltet.

9. Apparatur nach einem der vorherigen Ansprüche, wobei das Mittel zum Ausgeben eines Volumens an Druckfluid einen Druckgaskanister beinhaltet.

10. Apparatur nach einem der vorherigen Ansprüche, die eine Projektionsvorrichtung beinhaltet, die ein nachzujagendes Bild projiziert und von einer Zufallssteuerung gesteuert wird.

11. Apparatur nach einem der vorherigen Ansprüche, die einen Spender beinhaltet, der das Futter nach dem Empfang eines Befehlssignals an ein autorisiertes Tier ausgibt.

12. Apparatur nach Anspruch 10 oder 11, die einen Detektor zum Orten der Position des Tieres und ein Mittel zum Bestimmen der Effizienz der Jagd gemäß einem Vergleich der Position des Bildes und der Position des Tieres beinhaltet, wobei der Prozessor so angeordnet ist, dass eine Belohnung in Abhängigkeit vom Empfang eines Befehlssignals abgegeben wird.

13. Apparatur nach einem der Ansprüche 10 bis 12, wobei die Projektionsvorrichtung so gestaltet ist, dass ein Bild in Gestalt einer Silhouette eines Tieres, wie z.B. einer Maus, projiziert wird.

14. Apparatur nach einem der vorherigen Ansprüche, wobei ein Signal von einem Sensor abgeleitet wird und der Prozessor anhand des genannten Signals ermittelt, ob restliches Futter konsumiert wurde, bevor mehr Futter ausgegeben wird.

15. Tragbare Tierfütterungsapparatur für ein Haustier nach einem der vorherigen Ansprüche, die Folgendes umfasst: einen Näherungssensor, der beim Gebrauch die Anwesenheit eines Tieres erfasst, und eine Antenne zum Empfangen von Signalen von einer subdermalen Funkfrequenzidentifikations-(RFID)-Vorrichtung; einen Prozessor zum Verarbeiten von Signalen, die von der RFID-Vorrichtung und von dem Näherungssensor abgeleitet wurden, wobei der genannte Prozessor ermittelt, ob das Tier ein autorisiertes oder ein nicht autorisiertes Tier ist; einen Aufbewahrungstrichter, der beim Gebrauch Tierfutter aufnimmt; einen Spender, der eine vorbestimmte Menge Tierfutter an ein autorisiertes Tier ausgibt; und einen Sender, der ein Signal zu einer Vorrichtung sendet, die dem autorisierten Tier anhand eines Signals mitteilt, dass die Ausgabe von Futter bevorsteht.

## Revendications

1. Appareil d'alimentation portable pour animaux destiné à un animal domestique comprenant : un détecteur de proximité qui, lors de l'utilisation, détecte la présence d'un animal et une antenne permettant de recevoir des signaux en provenance d'un dispositif d'identification par radiofréquence (RFID) sous-cutané ; un processeur permettant de traiter des signaux dérivés en provenance du dispositif RFID et du détecteur de proximité, ledit processeur déterminant si l'animal est un animal autorisé ou un animal non autorisé ; une trémie de stockage, qui, lors de l'utilisation, reçoit des aliments pour animaux ; un distributeur, qui sert à distribuer une quantité prédéterminée d'aliments pour animaux à un animal autorisé ; et un mécanisme de répulsion de l'animal non autorisé, auquel les aliments ne sont pas destinés.

2. Appareil selon la revendication 1, dans lequel, lors de l'utilisation, l'antenne se met à fonctionner dès la détection d'un animal par le détecteur de proximité.

3. Appareil selon la revendication 1 ou la revendication 2, dans lequel, lors de l'utilisation, le mécanisme de répulsion d'un animal non autorisé est actionné dès la détection d'un animal non autorisé par le détecteur de proximité.

4. Appareil selon la revendication 1, dans lequel le mécanisme de répulsion d'animaux non autorisés comprend un dispositif permettant de distribuer un volume de fluide sous pression.

5. Appareil selon la revendication 1, dans lequel un système de reconnaissance d'images est utilisé pour identifier l'animal.

6. Appareil selon l'une quelconque des revendications précédentes, comprenant un arrangement dont les dimensions et la forme permettent de recevoir la tête d'un animal, de manière à permettre un positionnement optimal de l'animal et du dispositif d'identification d'animal pour identifier l'animal.

7. Appareil selon les revendications 1, 3, et 4, dans lequel le mécanisme de répulsion d'animaux comprend en outre un dispositif sonore.

8. Appareil selon les revendications 1, 3, et 4, dans lequel le mécanisme de répulsion comprend un stimulus visuel.

9. Appareil selon l'une quelconque des revendications précédentes, dans lequel le moyen permettant de distribuer un volume de fluide sous pression comprend une cartouche de gaz comprimé.

10. Appareil selon l'une quelconque des revendications précédentes, comprenant un dispositif de projection arrangé pour projeter une image à poursuivre et fonctionnant sous la commande d'un dispositif de commande aléatoire.

11. Appareil selon l'une quelconque des revendications précédentes, comprenant un distributeur qui sert à distribuer les aliments à un animal autorisé dès réception d'un signal de commande.

12. Appareil selon la revendication 10 ou la revendication 11, comprenant un détecteur permettant de repérer la position de l'animal et un moyen permettant de déterminer l'efficacité de la poursuite selon une comparaison entre la position de l'image et la position de l'animal ce par quoi le processeur est arrangé pour lâcher une récompense en fonction de la réception d'un signal de commande.

13. Appareil selon l'une quelconque des revendications 10 à 12, dans lequel le dispositif de projection est adapté pour projeter une image sous la forme d'une silhouette d'un animal, telle une souris.

14. Appareil selon l'une quelconque des revendications précédentes, dans lequel un signal est dérivé en provenance d'un détecteur et le processeur détermine, d'après ledit signal, si les aliments résiduels ont été consommés avant de distribuer plus d'aliments.

15. Appareil d'alimentation portable pour animaux destiné à un animal domestique selon l'une quelconque des revendications précédentes, comprenant : un détecteur de proximité qui, lors de l'utilisation, détecte la présence d'un animal et une antenne permettant de recevoir des signaux en provenance d'un dispositif d'identification par radiofréquence (RFID) sous-cutané ; un processeur permettant de traiter des signaux dérivés en provenance du dispositif RFID et du détecteur de proximité, ledit processeur déterminant si l'animal est un animal autorisé ou un animal non autorisé ; une trémie de stockage, qui, lors de l'utilisation, reçoit des aliments pour animaux ; un distributeur, qui sert à distribuer une quantité prédéterminée d'aliments pour animaux à un animal autorisé ; et un émetteur émettant un signal à un dispositif qui fournit une alarme indiquant à un animal autorisé que des aliments sont sur le point d'être distribués.
